# EUROPEAN PATENT SPECIFICATION

(11) **EP 4 255 106 B1**
(45) Date of publication and mention of the grant of the patent: **04.06.2025**
(21) Application number: 21897823.7
(22) Date of filing: 17.11.2021
(51) Int. Cl.: H05B 3/58, H05B 3/14, H05B 3/18, H05B 3/20, F16L 53/35

(54) **HEATING STRUCTURE AND MANUFACTURING METHOD THEREFOR**
HEIZSTRUKTUR UND HERSTELLUNGSVERFAHREN DAFÜR
STRUCTURE CHAUFFANTE ET SON PROCÉDÉ DE FABRICATION

(30) Priority: 26.11.2020 JP 2020195786
(43) Date of publication of application: 04.10.2023
(73) Proprietor: Tomoegawa Corporation, Tokyo 104-8335 (JP)
(72) Inventor: KOKUI YAMAJI, Maika, Shizuoka-shi, Shizuoka 421-0192 (JP); MORIUCHI, Hideki, Shizuoka-shi, Shizuoka 421-0192 (JP); KURAHARA, Taku, Shizuoka-shi, Shizuoka 421-0192 (JP)
(74) Representative: TBK
(86) International application number: PCT/JP2021/042249
(87) International publication number: WO 2022/113849

(56) References cited:
- DE-U1- 8 218 486
- GB-A- 744 435
- JP-A- 2004 195 887
- JP-A- 2004 225 824
- JP-U- S5 854 293
- JP-U- S54 128 916
- KR-B1- 101 433 695

## Description

### TECHNICAL FIELD

The present invention relates to a heating structure and a manufacturing method therefor.

### BACKGROUND ART

Heretofore, when a jacket heater or the like is set on the outer peripheral side of an object to be heated such as a flexible pipe, an air layer having low thermal conduction properties remains in recesses of the pipe and heat conduction to the object to be heated is therefore deteriorated. In addition, overshoot occasionally occurred due to heat retained in the jacket heater or the like.

As a conventional method related thereto, for instance, Patent Document 1 describes that a uniform heating plate having slits in a direction perpendicular to a direction of piping is set around a bendable pipe and a thermal insulation sheet having heating elements embedded therein is fixed to the outside of the uniform heating plate with springs and fixing hooks, thereby making a heater follow the bent shape of the pipe.

For instance, Patent Document 2 describes directly setting a PI heater on each layer of bellows of a pipe and heating the PI heater.

Patent Document 3 discloses a corrugated pipe heater structure as indicated in the preamble of claim 1.

### CITATION LIST

### PATENT DOCUMENTS

Patent Document 1: JP 2000-173754 A
Patent Document 2: JP 2004-225824 A
Patent Document 3: KR 101 433 695 B1

### SUMMARY OF THE INVENTION

### PROBLEM TO BE SOLVED BY THE INVENTION

In the planar heating device described in Patent Document 1, however, air remaining in gaps hindered uniform heating although the following ability was improved by the slits.

In Patent Documents 2 and 3, workability in attachment/detachment is low.

An object of the present invention is to solve the problems as described above. Specifically, the present invention aims at providing a heating structure which is capable of efficiently and uniformly heating an object to be heated owing to high thermal conduction properties from a heater to the object to be heated, consequently contributing to energy saving, which hardly retains heat between the heater and the object to be heated and is therefore less likely to cause overshoot, and which also has high workability in attachment/detachment. The present invention also aims at providing a manufacturing method therefor.

### MEANS FOR SOLVING THE PROBLEM

The inventors of the present invention have made an intensive study to solve the problems described above and completed the present invention.

The present invention provides the following.

A heating structure comprising:
an object to be heated having recesses at its surface;
a laminate type heater including a heat generation layer and one or more layers covering the heat generation layer; and
a filler penetrating into the recesses between the surface of the object to be heated and a surface of the laminate type heater, and having flexibility and higher thermal conduction properties than air.

This heating structure is advantageous further developed as follows.

In the heating structure according to the invention the laminate type heater having flexibility, a first covering layer, the heat generation layer, a second covering layer and a heat diffusion layer may be stacked in this order, and of these the heat diffusion layer being disposed at a position closest to the object to be heated.

In the heating structure according to the invention the filler may be made of a metal fiber porous material and/or resin.

In the heating structure according to the invention the recesses present at the surface of the object to be heated may have a depth of 0.1 mm or more.

In the heating structure according to the invention the recesses present at the surface of the object to be heated may be in a groove shape, and may have a groove width of 30 mm or less.

In the heating structure according to the invention
the object to be heated may vibrate, and
the object to be heated and the laminate type heater may be configured so that their positions relative to each other are changeable.

In the heating structure according to the invention the object to be heated may be a flexible pipe.

A method of manufacturing a heating structure is further disclosed, the method comprising: a step of setting a filler between a surface of an object to be heated and a surface of a laminate type heater at positions where at least a part penetrates into recesses, whereby the heating structure corresponding to any one as previously indicated is obtained.

### EFFECT OF THE INVENTION

The present invention can provide a heating structure which is capable of efficiently and uniformly heating an object to be heated owing to high thermal conduction properties from a heater to the object to be heated, consequently contributing to energy saving, which hardly retains heat between the heater and the object to be heated and is therefore less likely to cause overshoot, and which also has high workability in attachment/detachment as well as a manufacturing method therefor.

### BRIEF DESCRIPTION OF THE DRAWINGS

[FIG. 1] FIG. 1 is a schematic cross-sectional view in a case where a flexible pipe is cut by a plane containing its central axis ω.
[FIG. 2] FIG. 2 is a schematic cross-sectional view in a case where parallel narrow pipes are cut by a plane perpendicular to their central axes.
[FIG. 3] FIG. 3 is a schematic cross-sectional view for illustrating a manufacturing process of a heating structure of the invention.
[FIG. 4] FIG. 4 is another schematic cross-sectional view for illustrating the manufacturing process of the heating structure of the invention.
[FIG. 5] FIG. 5 is a schematic cross-sectional view of an experiment device used in Examples.
[FIG. 6] FIG. 6 is a schematic view showing a circuit for generating heat by energizing a heat generation layer in Examples.

### DESCRIPTION OF EMBODIMENTS

The present invention provides a heating structure including: an object to be heated having recesses at its surface; a laminate type heater including a heat generation layer and one or more layers covering the heat generation layer; and a filler penetrating into the recesses between the surface of the object to be heated and a surface of the laminate type heater, and having flexibility and higher thermal conduction properties than air.

The heating structure as described above is hereinafter referred to also as the "heating structure of the invention."

The present invention also provides a method of manufacturing a heating structure, the method including a step of setting a filler between a surface of an object to be heated and a surface of a laminate type heater at positions where at least a part penetrates into recesses, whereby the heating structure of the invention is obtained.

The manufacturing method as described above is hereinafter referred to also as the "manufacturing method of the invention."

The heating structure of the invention is preferably manufactured by the manufacturing method of the invention.

The term "the invention "as simply used hereinafter refers to both the "heating structure of the invention "and the "manufacturing method of the invention."

### <Heating Structure of Invention>

The heating structure of the invention is now described.

The heating structure of the invention includes an object to be heated, a laminate type heater, and a filler.

### <Object to Be Heated>

The object to be heated in the heating structure of the invention is now described.

The object to be heated means an object itself or an object of which the content is to be subjected to heat application.

Examples of such an object to be heated include a pipe having an undulating surface such as a flexible pipe; and a bundle of pipes having an undulating surface formed as a whole such as a parallel narrow pipe unit. In the flexible pipe and the parallel narrow pipe unit, fluid flows in their interiors but it is sometimes necessary to apply heat to the fluid.

The object to be heated has recesses at its surface. The recesses mean holes and grooves with respect to a smooth main surface. For example, in the flexible pipe, a large number of grooves which are concave toward its central axis are formed at its surface and the grooves correspond to the recesses. For example, in the parallel narrow pipe unit, a groove is present between one pipe and another and the groove corresponds to the recess.

The recesses present at the surface of the object to be heated each preferably have a depth of 0.1 mm or more, more preferably 0.5 mm or more, and even more preferably 1.0 mm or more. The upper limit of the depth of the recesses is not particularly limited and the recesses usually have a depth of 30 mm or less.

The size (aperture area) of the recesses is not particularly limited. When the recesses are holes, the holes preferably have an equal-area circle equivalent diameter of 30 mm or less, more preferably 15 mm or less, and even more preferably 10 mm or less.

When the recesses are in a groove shape, the recesses preferably have a groove width of 30 mm or less, more preferably 15 mm or less, and even more preferably 10 mm or less.

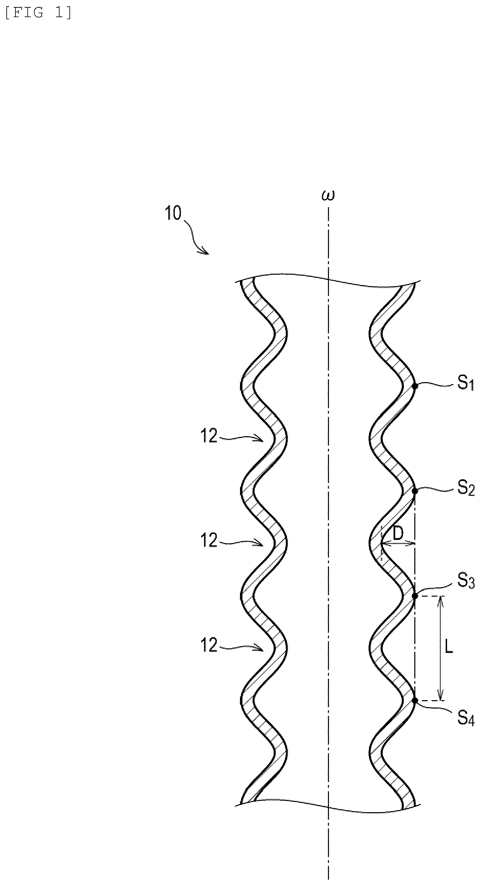

A case where the object to be heated is a flexible pipe is described with reference to FIG. 1.

FIG. 1 is a schematic cross-sectional view in a case where an exemplary flexible pipe is cut by a plane containing its central axis ω.

The lateral surface of a flexible pipe 10 shown in FIG. 1 forms a sine wave in its cross-sectional view.

The smooth main surface in the flexible pipe 10 shown in FIG. 1 is a virtual surface obtained by connecting tops S₁, S₂, S₃ and S₄ of the sine wave formed at the lateral surface in FIG. 1, and grooves are formed as recesses 12 with respect to the main surface (virtual surface). A large number of grooves (recesses 12) which are concave toward the central axis ω of the flexible pipe 10 are formed at the surface.

The depth of the grooves (recesses 12) is denoted by D in FIG. 1. Specifically, D is the depth from the main surface of the flexible pipe 10 in a direction perpendicular to the central axis ω.

Further, as denoted by L in FIG. 1, the width of the grooves (recesses 12) is a distance between adjacent tops in a direction parallel to the central axis ω.

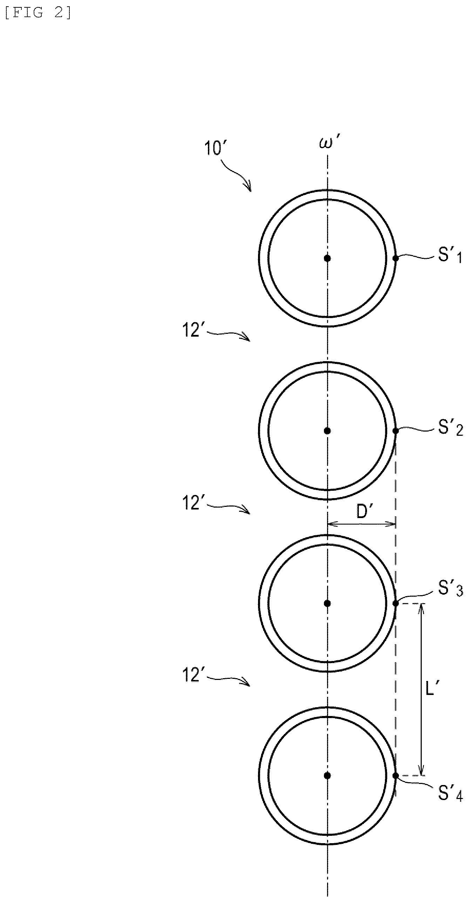

A case where the object to be heated is a parallel narrow pipe unit is described with reference to FIG. 2.

FIG. 2 is a schematic cross-sectional view of an illustrative parallel narrow pipe unit in a case where it is cut by a plane perpendicular to the central axis of each narrow pipe. A line formed by connecting the center of each pipe shown in FIG. 2 is denoted by ω'.

The smooth main surface in the parallel narrow pipe unit 10 'shown in FIG. 2 is a virtual surface represented by a tangent line which touches the rims of two narrow pipes shown in FIG. 2 (points of tangency at which the tangent line touches the rims of the narrow pipes are denoted by S'₁, S'₂, S'₃, and S'₄, respectively), and grooves are formed as recesses 12 'with respect to the main surface (virtual surface). A large number of grooves (recesses 12') which are concave toward the line ω 'in the parallel pipe unit 10 'are formed at its surface.

The depth of the grooves (recesses 12') is denoted by D 'in FIG. 2. D 'is the depth from the main surface of the parallel narrow pipe unit 10 'in a direction perpendicular to the central axis ω'.

Further, as denoted by L 'in FIG. 2, the width of the grooves (recesses 12') is a distance between adjacent points of tangency in a direction parallel to the central axis ω'.

The object to be heated may vibrate. The flexible pipe usually vibrates when fluid flows in its interior. Therefore, the flexible pipe corresponds to the vibrating object to be heated.

Further, for example, in the flexible pipe embodiment shown in FIG. 1, the flexible pipe that may be used as the object to be heated is one in which, when the flexible pipe length in the direction parallel to the central axis ω without external force applied is taken as 100%, expansion and contraction in the same direction with external force applied fall within ±30%.

In a case where the object to be heated vibrates, the object to be heated and the laminate type heater are preferably configured so that their positions relative to each other are changeable. For instance, in a case where the object to be heated and the laminate type heater are fixed to each other with an adhesive, the relative positions of the object to be heated and the laminate type heater are almost unchanged. On the other hand, for instance, in a case where the periphery of the flexible pipe as the object to be heated is covered with the laminate type heater and a clamping band is wrapped around the heater to secure the laminate type heater around the flexible pipe, it is possible to change the relative positions of the flexible pipe and the laminate type heater. This case is preferable in that the laminate type heater is less likely to be broken.

The size and the material of the object to be heated are not particularly limited. Examples of the material include inorganic matter (in particular metal) and organic matter.

Examples of the object to be heated include, in addition to the flexible pipe and the parallel pipe unit, a joint, a flexible tube, a flexible hose, bellows, a gas panel, and a gas box.

### <Laminate Type Heater>

The laminate type heater included in the heating structure of the invention is now described.

The laminate type heater includes a heat generation layer.

The heat generation layer is in a layer, plate, foil, or sheet shape, or in an aspect similar thereto. The heat generation layer preferably generates heat through energization. For example, metal foil that generates heat through energization can be used as the heat generation layer. For example, a metal fiber layer in which linear or fibrous metal is processed into a layer shape may be preferably used as the heat generation layer. The heat generation layer may be made of carbon.

In a case where the heat generation layer has a small thickness, or in a case where the heat generation layer is a metal fiber layer in which linear or fibrous metal is processed into a layer shape, the laminate type heater tends to have flexibility.

Flexibility means the property of being bendable or flexible.

The heat generation layer preferably has a thickness of 10 to 600 µm, and more preferably 20 to 150 µm. The thickness is preferably about 30 µm in terms of flexibility and strength.

An enlarged photo (200X) of a cross-section in a direction perpendicular to a main surface of the laminate type heater is obtained, and then the thickness of the heat generation layer on the enlarged photo of the cross-section is measured at arbitrarily selected 100 points, and a simple average value of measurements is determined. The resulting value is taken as the thickness of the heat generation layer.

The thicknesses of covering layers (including a first covering layer and a second covering layer), a heat diffusion layer and the like which will be described layer are also measured by the same method and simple average values of measurements are determined. The resulting values are taken as their thicknesses.

In a case where the heat generation layer is a metal fiber layer, metal fibers making up the metal fiber layer are preferably metal fibers having a cross-sectional diameter in terms of equal-area circle equivalent diameter of 2 to 100 µm (preferably 5 to 20 µm) and a length of 2 to 20 mm. Then, the metal fiber layer is preferably one in which an infinite number of such metal fibers are entangled in a complex way to form a sheet shape.

In the metal fiber layer, the metal fibers are preferably in contact with each other to such a degree that energization is made. The metal fibers are preferably connected to each other at their points of contact. For instance, by having a history that part of metal fibers are melted through sintering at high temperatures and then solidified, the metal fibers are preferably fused together at their points of contact.

The material of the metal fibers is preferably stainless steel. An example of the metal fiber layer made of stainless steel metal fibers is a stainless steel fiber sheet (Tommy Filec SS manufactured by Tomoegawa Co., Ltd.).

The material of the metal fibers may also be Cu (copper), Al (aluminum), Ni (nickel) or Nichrome.

The metal fiber layer preferably has a basis weight of 25 g/m² or more and preferably 50 g/m² or more. The metal fiber layer preferably has a basis weight of 1,000 g/m² or less and more preferably 200 g/m² or less.

The metal fiber layer preferably has a density of 1.0 to 5.0 g/cm³, more preferably 1.4 to 2.0 g/cm³, and preferably about 1.7 g/m³.

The metal fiber layer can be manufactured by both a dry non-woven fabric manufacturing process and a wet papermaking process. When it is manufactured by the wet papermaking process, an infinite number of metallic fibers which have a cross-sectional diameter of 2 to 100 µm in terms of equal-area circle equivalent diameter and a length of 2 to 20 mm are stirred in a dispersion medium (water, an organic solvent or the like) and an organic flocculant is then added. The mixture is formed into a sheet shape using a rectangular hand papermaking device (manufactured by Toyo Seiki Seisaku-sho, Ltd. or the like), and a dry sheet with a basis weight of 50 to 1,100 g/m² is obtained using a ferrotype drying device. Thereafter, the sheet is fired at 400 to 1,300°C to obtain the metal fiber layer. When the metal fiber layer is obtained by the manufacturing process as described above, in principle no organic flocculant remains in the metal fiber layer.

The laminate type heater in the heating structure of the invention includes the heat generation layer as described above and further includes one or more layers covering the heat generation layer.

Such layers covering the heat generation layer are also referred to below as covering layers.

The covering layers are layers that cover the main surfaces included in the heat generation layer. The covering layers may also cover end surfaces of the heat generation layer in addition to the main surfaces included in the heat generation layer.

The covering layers preferably have insulation properties and more preferably have insulation properties and flexibility.

Exemplary materials of the covering layers include PET (polyethylene terephthalate), PI (polyimide), PP (polypropylene), PE (polyethylene), PEN (polyethylene naphthalate), and TAC (triacetyl cellulose). When such materials are used, the laminate type heater tends to having flexibility.

The covering layers may be in the form of a film, or be made of woven fabric or non-woven fabric. Specifically, fiber sheets such as an aramid fiber sheet and glass cloth can be preferably used as the non-woven fabric.

In a case where the object to be heated has a cylindrical shape and its outer periphery is covered with the laminate type heater, the difference between the internal diameter and the external diameter can be preferably absorbed by using non-woven fabric as the covering layers.

The thickness of the covering layers is not particularly limited, and is preferably 15 to 100 µm, more preferably 15 to 75 µm, even more preferably 30 to 75 µm, and still more preferably about 50 µm.

The laminate type heater is preferably in an embodiment in which both main surfaces of the heat generation layer are covered with two covering layers (hereinafter referred to as a first covering layer and a second covering layer). In other words, the laminate type heater is preferably one in which the first covering layer, the heat generation layer, and the second covering layer are stacked in this order.

The first covering layer and the second covering layer may be in embodiments different from each other.

In a case where the laminate type heater has the first covering layer and the second covering layer, each layer preferably has a thickness of 15 to 100 µm, more preferably 15 to 75 µm, even more preferably 30 to 75 µm, and still more preferably about 50 µm.

The laminate type heater preferably has a heat diffusion layer on a main surface of the first covering layer or the second covering layer to which the heat generation layer is not attached. In other words, the laminate type heater is preferably one in which the first covering layer, the heat generation layer, the second covering layer, and the heat diffusion layer are stacked in this order. Of the first covering layer, the heat generation layer, the second covering layer, and the heat diffusion layer, the heat diffusion layer is disposed at a position closest to the object to be heated.

In this case, non-woven fabric can be used for the first covering layer but non-woven fabric is preferably not used for the second covering layer on the side closer to the object to be heated. This is because non-woven fabric has thermal insulation properties due to the presence of voids, and therefore heat emitted from the laminate type heater may be less likely to be transmitted to the object to be heated.

When non-woven fabric is used for the first covering layer on the side farther from the object to be heated, heat is less likely to be discharged outside due to thermal insulation effect of the non-woven fabric, thus increasing the efficiency of heat transmission to the object to be heated. This use is effective in that further contribution to energy saving is possible.

The heat diffusion layer has a role in diffusing heat emitted by the heat generation layer. In this way, the laminate type heater has more uniform heating properties.

The thermal conductivity of the heat diffusion layer in its planar direction is preferably higher than that of the heat generation layer in its planar direction, because the performance in diffusing heat generated by the heat generation layer is further enhanced.

The thermal conductivity of the heat diffusion layer is measured at ordinary temperatures by known measurement methods such as laser flash thermal diffusivity measurement (for example, LFA series manufactured by NETZSCH) and AC thermal diffusivity measurement (for example, LaserPit series manufactured by ADVANCE RIKO Inc.).

Exemplary materials of the heat diffusion layer include metals such as aluminum, carbon, copper, zinc, lead, gold and silver, and ceramic materials such as alumina and aluminum nitride.

The heat diffusion layer is preferably made of aluminum because it has good flexibility and also has high thermal conductivity in a direction in which the heat diffusion layer extends.

Preferably, the heat diffusion layer is made of aluminum and the heat generation layer is made of an SUS fiber sheet.

The thickness of the heat diffusion layer is not particularly limited, and is preferably 5 to 100 µm, more preferably 10 to 50 µm, and even more preferably about 20 µm.

The heating structure of the invention preferably further has a thermal insulation material on a main surface of the first covering layer in the laminate type heater to which the heat generation layer is not attached. Of the thermal insulation material, the first covering layer, the heat generation layer, the second covering layer, and the heat diffusion layer, the thermal insulation material is disposed at a position farthest from the object to be heated.

It is preferable to have the thermal insulation material in the heating structure of the invention because heat can be efficiently supplied to the object to be heated, and it also contributes to the uniform heating properties.

Examples of the thermal insulation material include fiber thermal insulation materials (glass wool, rock wool, cellulose fiber, and Wool Breath), and foam thermal insulation materials (urethane foam and phenolic foam).

The thickness of the thermal insulation material is not particularly limited, and is preferably 15 to 100,000 µm, more preferably 30 to 50,000 µm, and even more preferably about 10,000 µm.

The thickness of the thermal insulation material is measured with a caliper.

The first covering layer, the heat generation layer, the second covering layer, and the heat diffusion layer are preferably adhered to one another (including between the heat generation layer and the covering layers) with an adhesive.

On the other hand, the covering layer and the thermal insulation material are preferably not adhered to each other with an adhesive to improve the adhesion to the object to be heated. In terms of improving workability in heater setting, the covering layer and the thermal insulation material are preferably partially fixed to each other by a method such as sewing a part.

Examples of the adhesive that may be used include a fluorine adhesive, an acrylic adhesive, a silicone adhesive, and a rubber elastomer such as NBR. Both a thermosetting type and a thermoplastic type can be used.

Specific examples of the laminate type heater include a jacket heater, a film heater, a silicone rubber heater, a ribbon heater, and a sheathed heater.

In a case where the object to be heated is a pipe (in particular a flexible pipe), the laminate type heater is preferably a jacket heater. Further, the laminate type heater is preferably in an embodiment in which the above-mentioned first covering layer, heat generation layer, second covering layer and heat diffusion layer are stacked in this order, and of these the heat diffusion layer is disposed at the position closest to the object to be heated, or an embodiment in which the first covering layer having the above-mentioned thermal insulation material attached thereto, the heat generation layer, the second covering layer, and the heat diffusion layer are stacked in this order, and of these the heat diffusion layer is disposed at the position closest to the object to be heated.

### <Filler>

The filler included in the heating structure of the invention is now described.

The filler is set between the surface of the object to be heated and the surface of the laminate type heater at positions where at least a part penetrates into the recesses present at the surface of the object to be heated.

The filler has flexibility.

Flexibility means the property that the filler penetrates into the recesses when the filler is set on the surface of the object to be heated and stress is applied in a direction in which the filler is pushed into the recesses present at the surface of the object to be heated.

In addition to the flexibility, the filler has higher thermal conduction properties than air. In other words, the filler has higher thermal conductivity than air.

The thermal conductivity of the filler is preferably 0.05 W/m·K or more, more preferably 0.08 W/m·K or more, and even more preferably 0.1 W/m·K or more.

The thermal conductivity herein means a value measured by a measurement method according to ASTM D5470" Standard Test Method for Thermal Transmission Properties of Thermally Conductive Electrical Insulation Materials."

Specific examples of the filler as described above include resin such as rubber, silicone, metal fiber porous materials such as metal wool containing metal fibers and a metal fiber sheet, a carbon fiber sheet, an inorganic fiber sheet, a plant fiber sheet, a powder-carrying sheet, and ceramic fiber bulk. Further, these preferably contain a thermally conductive filler. Of these, a metal fiber sheet, and resin containing a thermally conductive filler are more preferred.

In a case where the filler is in the form of a metal fiber sheet, one similar to the above-mentioned metal fiber layer may be used as the metal fiber sheet.

The metal fiber sheet making up the filler is preferably made of stainless steel fibers, copper fibers, aluminum fibers or nickel fibers.

The metal fiber sheet thickness, the cross-sectional diameter of the metal fibers in terms of equal-area circle equivalent diameter, the material, the basis weight, the density, the production method, and the like may be the same as in the above-mentioned metal fiber layer.

In a case where the filler is a metal fiber porous material such as metal wool or a metal fiber sheet, the recesses are preferably filled with the metal fibers so that the recess volume ratio is 10% or more, and more preferably 20% or more.

The recess volume ratio herein means a ratio of the volume of a solid used to fill recesses to the volume of the recesses. The volume of the recesses is calculated from the mass of a density-known solid necessary to completely fill the recesses, and the density of the solid. The density-known solid is not particularly limited but any solid may be used if filling can be made so as to occlude voids of the recesses. Examples of the density-known solid include resin such as rubber, and silicone. The volume of the solid used to fill the recesses is calculated from the density of the material used as the filler as well as the mass of the filler taken out of the recesses which were filled with the filler.

In a case where the filler is made of resin, the filler preferably has a hardness of A10 to A80, and more preferably A20 to A40. The hardness of the filler is measured according to JIS K6253 using a type A durometer.

In a case where the filler is made of resin, the recesses are preferably filled with the resin at a recess volume ratio of 30% or more, more preferably 50% or more, and even more preferably 70% or more.

The recess volume ratio is determined by the same method as in the above-mentioned metal fiber porous material.

The density of the filler which is present on the portions other than the recesses of the object to be heated (specifically, between the projected parts of the object to be heated and the laminate type heater) is preferably higher than that of the filler present in the recesses at the surface of the object to be heated.

### <Manufacturing Method of Invention>

Next, the manufacturing method of the invention is described.

The manufacturing method of the invention includes a step of setting a filler between a surface of an object to be heated and a surface of a laminate type heater at positions where at least a part penetrates into recesses.

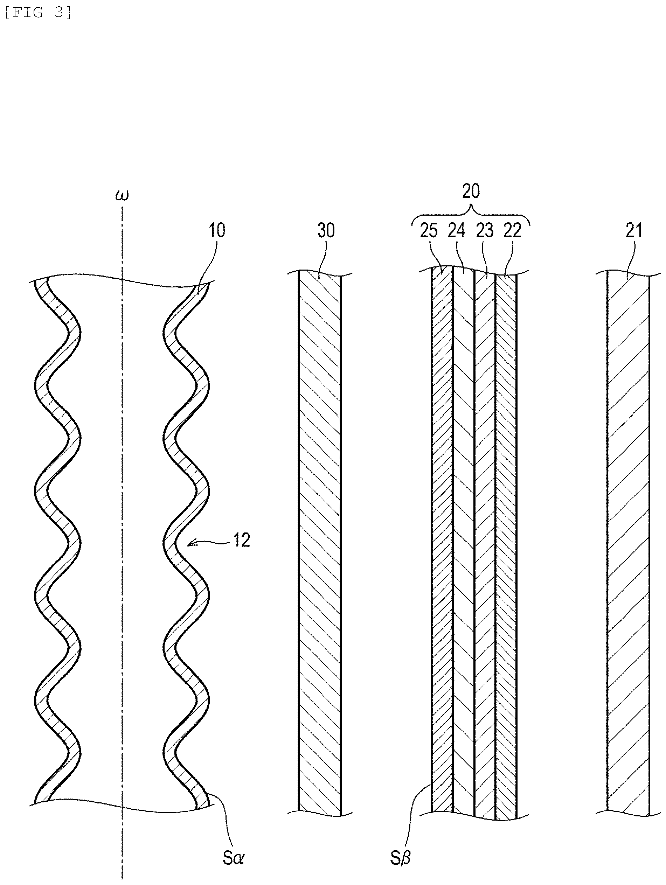

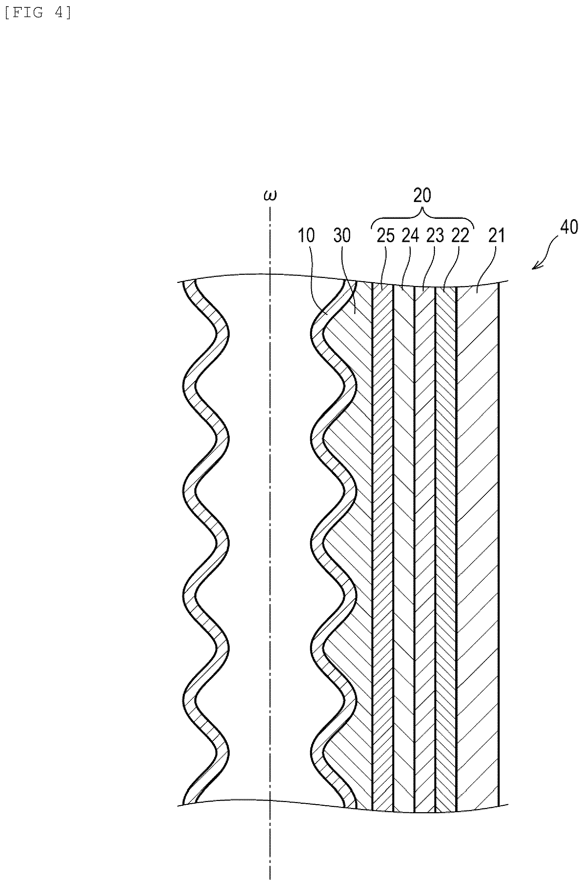

FIG. 3 and FIG. 4 are each a diagram for illustrating a process of manufacturing the heating structure of the invention. FIG. 3 is a schematic cross-sectional view in a case where the flexible pipe 10, a laminate type heater 20, a metal fiber sheet 30, and a thermal insulation material 21 are cut by a plane containing the central axis ω of the flexible pipe as in FIG. 1 in a state in which the metal fiber sheet 30 is set as the filler between a surface Sα of the flexible pipe 10 as the object to be heated and a surface Sβ of the laminate type heater 20, at positions where at least a part penetrates into the recesses 12.

As described above, the filler is not limited to one having a sheet or layer shape, and FIG. 3 and FIG. 4 show a case where the filler is the metal fiber sheet 30.

In FIG. 3 and FIG. 4, the laminate type heater 20 includes a first covering layer 22, a heat generation layer 23, a second covering layer 24, and a heat diffusion layer 25. The thermal insulation material 21 is provided outside the first covering layer 22.

When the metal fiber sheet 30 is pressed against the surface of the flexible pipe 10 in the state shown in FIG. 3, a part of the metal fiber sheet 30 penetrates into the recesses 12 at the surface of the flexible pipe 10 while it is crushed. Further, the laminate type heater 20 may be pressed against the surface of the flexible pipe 10 in the state shown in FIG. 3. Also in this case, a part of the metal fiber sheet 30 penetrates into the recesses 12 at the surface of the flexible pipe 10 while it is crushed.

As a result, is obtained as shown in FIG. 4, a heating structure 40 of the invention in which the recesses 12 at the surface of the flexible pipe 10 are approximately filled with the metal fiber sheet 30 (more precisely metal fibers which are not necessarily in a sheet shape due to the crushed metal fiber sheet 30).

The method of fixing the object to be heated and the laminate type heater to each other after setting the filler between the surface of the object to be heated and the laminate type heater is not particularly limited. Fixing may be made, for example, using an adhesive. However, the laminate type heater is preferably secured around the object to be heated by covering the outer peripheral side of the object to be heated (for example, a flexible pipe) with the laminate type heater (for example, a jacket heater) and wrapping a clamping band around the heater. Particularly in a case where the object to be heated vibrates like the flexible pipe, the object to be heated and the laminate type heater can change their relative positions. Accordingly, when the laminate type heater is secured by wrapping the clamping band around the object to be heated as described above, the laminate type heater is less likely to be broken and this is preferable.

### EXAMPLES

Examples of the invention are now described. The invention is not limited to embodiments of Examples to be described below.

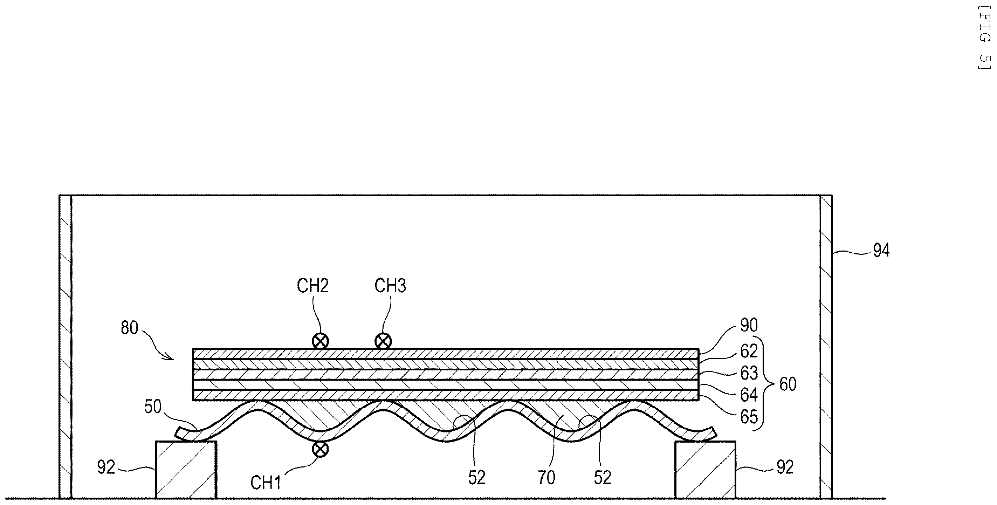

FIG. 5 is a schematic cross-sectional view of an experiment device used in Examples. As shown in FIG. 5, a heating structure 80 of the invention is disposed on seats 92 with a height of about 50 mm so that its longitudinal direction is horizontal and a corrugated sheet 50 as the object to be heated is on the lower side.

Thermocouples are set at three points (CH1, CH2, CH3) on surfaces of the heating structure 80 of the invention. Each thermocouple is connected to a logger and is configured so that the temperature can be measured and recorded for each second.

The measurement point CH1 is positioned at a top surface of a recess 52 of the corrugated sheet 50, the measurement point CH2 is positioned at the same point as the measurement point CH1 in a horizontal direction and on the outer surface of aluminum foil 90, and the measurement point CH3 is positioned on the outer surface of the aluminum foil 90 and at a top of a projected part of the corrugated sheet 50 in the horizontal direction (point corresponding to each of the tops S₁ to S₄ in FIG. 1 and the points of tangency S'₁ to S'₄ in FIG. 2).

As shown in FIG. 5, the periphery of the heating structure 80 of the invention (except its upper part) is surrounded by a cardboard 94 serving as a wind guard.

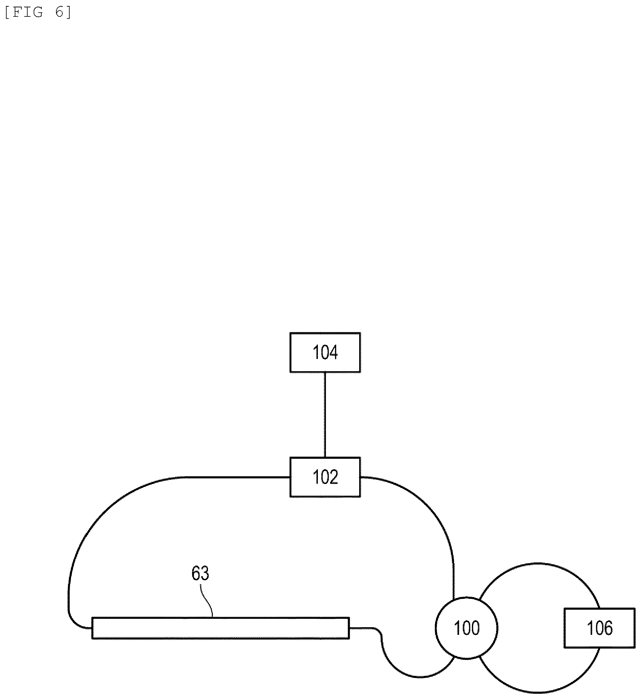

FIG. 6 shows a circuit for generating heat by energizing a heat generation layer 63 included in the heating structure 80 of the invention. In FIG. 6, when a power source 100 is turned on, the heat generation layer 63 is energized to generate heat. A Slidac in which voltage is adjustable was used as the power source 100. The current at the time of its energization is measured with a clamp meter 102 and is recorded for each second by a logger 104 connected to the clamp meter 102. Further, the power source 100 is connected to a tester 106, where the voltage at the time of energization is measured.

An experiment was performed in a room adjusted to a temperature of 25°C and a humidity of 50%.

### <Object to Be Heated>

As the object to be heated was prepared the corrugated sheet 50 which was a galvanized steel sheet having a cross-section as shown in FIG. 5.

The mass of the corrugated sheet 50 was measured and thereafter a recess 52 of the corrugated sheet 50 was filled with pure water and its mass was measured again to determine the mass of only pure water. Then, the volume of the recess 52 of the corrugated sheet 50 was determined in consideration of the density (1 g/cm³) of pure water. This volume will be used later when calculating the recess volume ratio of a filler 70.

<Laminate Type Heater>

A laminate type heater 60 according to the invention which further included aluminum foil outside a first covering layer was prepared. Specifically, this laminate type heater 60 is, as shown in FIG. 5, a laminate in which a first covering layer 62, the heat generation layer 63, a second covering layer 64, and a heat diffusion layer 65 are stacked in this order, and which further has aluminum foil 90 on the outer surface of the first covering layer 62.

The first covering layer 62 is a layer (thickness: 25 µm) made of polyimide resin.

The heat generation layer 63 is made of a stainless steel fiber sheet (thickness: 30 µm).

The second covering layer 64 is a layer (thickness: 25 µm) made of polyimide resin.

The heat diffusion layer 65 is an aluminum foil layer (thickness: 30 µm).

### <Example 1>

The filler 70 was set between the corrugated sheet 50 and the laminate type heater 60 as described above to obtain the heating structure 80. This is described below.

In Example 1, silicone rubber (1222C manufactured by ThreeBond Co., Ltd.) was used as the filler 70. The recesses 52 of the corrugated sheet 50 were filled with the largest possible amount of the silicone rubber and the corrugated sheet 50 was then held in an oven at a temperature of 50°C and a humidity of 60% for 12 hours or more to cure the filler. The thermal conductivity measured after curing according to the above-mentioned ASTM D5470 was 0.15 W/mK. The hardness measured after curing according to the above-mentioned JIS K6253 was A38.

The mass of the corrugated sheet 50 before and after filling the recesses 52 with the silicone rubber was measured to determine the mass of the only silicone rubber used for filling. The resulting mass was divided by the silicone rubber density (1.32 g/cm³) to determine the volume of the silicone rubber used to fill the recesses 52.

This volume was divided by the predetermined volume of the recesses 52 of the corrugated sheet 50 to calculate the recess volume ratio.

As a result, the recess volume ratio of the heating structure 80 in Example 1 was 86%.

Next, the projected parts (points corresponding to the tops S₁ to S₄ in FIG. 1 and the points of tangency S'₁ to S'₄ in FIG. 2) in the corrugated sheet 50 which had the recesses 52 filled with the silicone rubber serving as the filler 70 were adhered with an adhesive (silicone adhesive) to a main surface of the heat diffusion layer 65 included in the laminate type heater 60. The filler 70 is used for filling so as not to be present at the projected parts.

The heating structure 80 in Example 1 was obtained in this way and was then subjected to a test for evaluating heat application to be described later.

### <Example 2>

In Example 1, silicone rubber was used as the filler 70 but in Example 2, a stainless steel fiber sheet (SUS fiber sheet Tommy Filec SS manufactured by Tomoegawa Co., Ltd.; a roll (sintered) with a basis weight of 50 g/m²) was used instead.

First, the SUS fiber sheet was cut into strips each having a length of the recesses 52 of the corrugated sheet 50 and the recesses 52 were filled with the largest possible number of the strips.

Next, the SUS fiber sheet used to fill the recesses 52 was taken out and its mass was measured. The volume was determined in consideration of the density (7.98 g/m³).

This volume was divided by the predetermined volume of the recesses 52 of the corrugated sheet 50 to calculate the recess volume ratio.

As a result, the recess volume ratio of the heating structure 80 in Example 2 was 10%.

Next, the projected parts (points corresponding to the tops S₁ to S₄ in FIG. 1 and the points of tangency S'₁ to S'₄ in FIG. 2) in the corrugated sheet 50 which had the recesses 52 filled with the SUS fiber sheet serving as the filler 70 were adhered with an adhesive (silicone adhesive) to the main surface of the heat diffusion layer 65 included in the laminate type heater 60. The filler 70 is used for filling so as not to be present at the projected parts.

The heating structure 80 in Example 2 was obtained in this way and was then subjected to the test for evaluating heat application to be described later.

### <Comparative Example 1>

In Example 1, silicone rubber was used as the filler 70 but the filler 70 was not used in Comparative Example 1. The thermal conductivity of air in the recesses 52 measured according to the above-mentioned ASTM D5470 was 0.026 W/mK.

Next, the projected parts (points corresponding to the tops S₁ to S₄ in FIG. 1 and the points of tangency S'₁ to S'₄ in FIG. 2) in the corrugated sheet 50 in which the recesses 52 were not filled with the filler 70 were adhered with an adhesive (silicone adhesive) to the main surface of the heat diffusion layer 65 included in the laminate type heater 60.

The heating structure 80 in Comparative Example 1 was obtained in this way and was then subjected to the test for evaluating heat application to be described later.

### <Test for Evaluating Heat Application>

The respective heating structures 80 according to Example 1, Example 2, and Comparative Example 1 obtained as described above were subjected to the test for evaluating heat application to be described below.

First as a preliminary preparation, the heating structure 80 in Comparative Example 1 was set as shown in FIG. 5 and FIG. 6 and the power source 100 was turned on. After the passage of a sufficient period of time, the voltage of the power source 100 was adjusted so that the temperature at the measurement point CH3 was 130°C. Since then, the adjusted voltage is not changed.

Thereafter, the heating structure was allowed to cool in a room until the temperature at each measurement point indicated room temperature.

Next, each of the heating structures 80 in Example 1, Example 2 and Comparative Example 1 was set as shown in FIG. 5 and FIG. 6 and the power source 100 was turned on.

When the temperature at each measurement point indicated a stable value for 30 minutes or more, the power source 100 was turned off.

Thereafter, from the temperature values measured and recorded by the logger, an average value of the stable temperature at each measurement point was determined.

An electric power value (average value) when the temperature at each measurement point was stable was determined from the current measured by the logger 104 and the voltage measured by the tester 106.

The results are shown in Table 1.

**[Table 1]**

| | | Example 1 | Example 2 | Comparative Example 1 |
|---|---|---|---|---|
| Electric power | [W] | 32.48 | 32.58 | 33.05 |
| | Comparison of temperature with Comparative Example 1 | -0.57 | -0.19 | - |
| Uniform heating properties and overshoot | ΔT (=CH2-CH1) | 18.1 | 19.4 | 25.4 |
| | Comparison of temperature with Comparative Example 1 | -7.3 | -6.0 | - |
| Service life of heater | ΔT (=CH2-CH3) | -0.7 | -1.5 | 5.0 |

As compared with the heating structure 80 in Comparative Example 1, the heating structures 80 according to Example 1 and Example 2 that correspond to the heating structure of the invention showed reduced electric power and in addition a smaller temperature difference (ΔT) between CH2 and CH1. This indicates that the heating structure of the invention is excellent in thermal conduction properties from the heater to the object to be heated, is capable of efficiently and uniformly heating the object to be heated, and further hardly retains heat between the heater and the object to be heated and is therefore less likely to cause overshoot.

As compared with the heating structure 80 in Comparative Example 1, the heating structures 80 according to Example 1 and Example 2 that correspond to the heating structure of the invention showed a smaller temperature difference (ΔT) between CH2 and CH3. This indicates that local overheating is less likely to occur to lead to a lower risk of heater breakage or the service life of the heater is increased.

### Industrial Applicability

A typical example of the heating structure of the invention is one in which a jacket heater or the like is disposed around the outer periphery of a flexible pipe and a filler such as a metal fiber sheet is set therebetween. Another example is one in which heaters are disposed at base blocks of a gas box and a filler is set therebetween.

### REFERENCE SIGNS LIST

10 flexible pipe
10 'parallel narrow pipe unit
12, 12 'recess
ω central axis
ω 'line formed by connecting center of each pipe
S₁, S₂, S₃, S₄ top
S₁', S₂', S₃', S₄ 'point of tangency
D, D 'groove depth
L, L 'groove width
20 laminate type heater
21 thermal insulation material
22 first covering layer
23 heat generation layer
24 second covering layer
25 heat diffusion layer
30 metal fiber sheet
Sα surface of the flexible pipe
Sβ surface of the laminate type heater
40 heating structure of the invention
50 corrugated sheet
52 recess
60 laminate type heater
62 first covering layer
63 heat generation layer
64 second covering layer
65 heat diffusion layer
70 filler
80 heating structure
90 aluminum foil
92 seat
94 cardboard
100 power source
102 claim meter
104 logger
106 tester

## Claims

1. A heating structure (40) comprising:
an object to be heated (10) having recesses (12) at its surface;
a laminate type heater (20) including a heat generation layer (23) and one or more layers (22, 24, 25) covering the heat generation layer (23); and
being **characterised by**
a filler (30) penetrating into the recesses (12) between the surface of the object to be heated (10) and a surface of the laminate type heater (20), and having flexibility and higher thermal conduction properties than air.

2. The heating structure (40) according to claim 1, wherein the laminate type heater (20) has flexibility, a first covering layer (22), the heat generation layer (23), a second covering layer (24) and a heat diffusion layer (25) are stacked in this order, and of these the heat diffusion layer (25) is disposed at a position closest to the object to be heated (10).

3. The heating structure (40) according to claim 1 or 2, wherein the filler (30) is made of a metal fiber porous material and/or resin.

4. The heating structure (40) according to any one of claims 1 to 3, wherein the recesses (12) present at the surface of the object to be heated (10) has a depth of 0.1 mm or more.

5. The heating structure (40) according to any one of claims 1 to 4, wherein the recesses (12) present at the surface of the object to be heated (10) are in a groove shape, and have a groove width of 30 mm or less.

6. The heating structure (40) according to any one of claims 1 to 5, wherein
the object to be heated (10) may vibrate in use, and
the object to be heated and the laminate type heater are configured so that their positions relative to each other are changeable.

7. The heating structure (40) according to any one of claims 1 to 6, wherein the object to be heated (10) is a flexible pipe.

8. A method of manufacturing a heating structure, the method comprising: a step of setting a filler (30) between a surface of an object to be heated (10) and a surface of a laminate type heater (20) at positions where at least a part penetrates into recesses (12), whereby the heating structure (40) according to any one of claims 1 to 7 is obtained.

## Patentansprüche

1. Erwärmungsstruktur (40) mit:
einem zu erwärmenden Objekt (10) mit Vertiefungen (12) an seiner Oberfläche;
einer Heizeinrichtung (20) der Laminatart, die eine Wärmeerzeugungslage (23) und eine oder mehrere Lagen (22, 24, 25) hat, die die Wärmeerzeugungslage (23) bedeckt/bedecken; und
sie **gekennzeichnet ist durch**
einen Füllstoff (30), der in die Vertiefungen (12) zwischen der Oberfläche des zu erwärmenden Objektes (10) und einer Oberfläche der Heizeinrichtung (20) der Laminatart eindringt und eine Flexibilität hat und höhere thermische Leitfähigkeiten als Luft hat.

2. Erwärmungsstruktur (40) gemäß Anspruch 1, wobei die Heizeinrichtung (20) der Laminatart eine Flexibilität hat, eine erste Abdecklage (22), die Wärmeerzeugungslage (23), eine zweite Abdecklage (24) und eine Wärmediffusionslage (25) in dieser Reihenfolge gestapelt sind, und von diesen die Wärmediffusionslage (25) an einer Position angeordnet ist, die zu dem zu erwärmenden Objekt (10) am nächsten ist.

3. Erwärmungsstruktur (40) gemäß Anspruch 1 oder 2, wobei der Füllstoff (30) aus einem metallischen porösen Fasermaterial und/oder Kunststoff hergestellt ist.

4. Erwärmungsstruktur (40) gemäß einem der Ansprüche 1 bis 3, wobei die Vertiefungen (12), die an der Oberfläche des zu erwärmenden Objektes (10) vorhanden sind, eine Tiefe von 0,1 mm oder mehr haben.

5. Erwärmungsstruktur (40) gemäß einem der Ansprüche 1 bis 4, wobei die Vertiefungen (12), die an der Oberfläche des zu erwärmenden Objektes (10) vorhanden sind, in einer Nutform sind und eine Nutbreite von 30 mm oder weniger haben.

6. Erwärmungsstruktur (40) gemäß einem der Ansprüche 1 bis 5, wobei
das zu erwärmende Objekt (10) bei Anwendung vibrieren kann, und
das zu erwärmende Objekt und die Heizeinrichtung der Laminatart so aufgebaut sind, dass deren Positionen relativ zueinander austauschbar sind.

7. Erwärmungsstruktur (40) gemäß einem der Ansprüche 1 bis 6, wobei das zu erwärmende Objekt (10) ein flexibles Rohr ist.

8. Verfahren zum Herstellen einer Erwärmungsstruktur, wobei das Verfahren Folgendes aufweist: einen Schritt zum Setzen eines Füllstoffs (30) zwischen eine Oberfläche eines zu erwärmenden Objektes (10) und eine Oberfläche einer Heizeinrichtung (20) der Laminatart an Positionen, an denen zumindest ein Teil in Vertiefungen (12) eindringt, wodurch die Erwärmungsstruktur (40) gemäß einem der Ansprüche 1 bis 7 erlangt wird.

## Revendications

1. Structure de chauffage (40) comprenant :
un objet à chauffer (10) ayant des évidements (12) à sa surface ;
un dispositif de chauffage de type stratifié (20) comprenant une couche de génération de chaleur (23) et une ou plusieurs couches (22, 24, 25) recouvrant la couche de génération de chaleur (23) ; et
étant **caractérisée par**
un agent de remplissage (30) pénétrant dans les évidements (12) entre la surface de l'objet à chauffer (10) et une surface du dispositif de chauffage de type stratifié (20), et ayant une flexibilité et des propriétés de conduction thermique supérieures à celles de l'air.

2. Structure de chauffage (40) selon la revendication 1, dans laquelle le dispositif de chauffage de type stratifié (20) a une flexibilité, une première couche de recouvrement (22), la couche de génération de chaleur (23), une deuxième couche de recouvrement (24) et une couche de diffusion de chaleur (25) sont empilées dans cet ordre, et parmi celles-ci, la couche de diffusion de chaleur (25) est disposée à une position la plus proche de l'objet à chauffer (10).

3. Structure de chauffage (40) selon la revendication 1 ou 2, dans laquelle l'agent de remplissage (30) est constitué d'un matériau poreux en fibre métallique et/ou de résine.

4. Structure de chauffage (40) selon l'une des revendications 1 à 3, dans laquelle les évidements (12) présents à la surface de l'objet à chauffer (10) ont une profondeur de 0,1 mm ou plus.

5. Structure de chauffage (40) selon l'une des revendications 1 à 4, dans laquelle les évidements (12) présents à la surface de l'objet à chauffer (10) ont la forme d'une rainure, et ont une largeur de rainure de 30 mm ou moins.

6. Structure de chauffage (40) selon l'une des revendications 1 à 5, dans laquelle
l'objet à chauffer (10) peut vibrer en cours d'utilisation, et
l'objet à chauffer et le dispositif de chauffage de type stratifié sont configurés de sorte que leurs positions l'une par rapport à l'autre sont modifiables.

7. Structure de chauffage (40) selon l'une des revendications 1 à 6, dans laquelle l'objet à chauffer (10) est un tuyau flexible.

8. Procédé de fabrication d'une structure de chauffage, le procédé comprenant : une étape consistant à mettre un agent de remplissage (30) entre une surface d'un objet à chauffer (10) et une surface d'un dispositif de chauffage de type stratifié (20) à des positions où au moins une partie pénètre dans des évidements (12), ce qui permet d'obtenir la structure de chauffage (40) selon l'une des revendications 1 à 7.
